(19) Europäisches Patentamt

European Patent Office

Office européen des brevets

(11) EP 0 421 628 B1

(12) EUROPEAN PATENT SPECIFICATION

(45) Date of publication and mention
of the grant of the patent:
03.12.1997 Bulletin 1997/49

(51) Int Cl.6: **G03B 21/00**, G09F 19/18,
H04N 9/31

(21) Application number: 90310142.6

(22) Date of filing: 17.09.1990

(54) **Projection type liquid crystal display device**

LCD-Anzeigevorrichtung vom Projektionstyp

Dispositif d'affichage LCD pour projection

(84) Designated Contracting States:
DE FR GB NL

(30) Priority: 05.10.1989 JP 260882/89

(43) Date of publication of application:
10.04.1991 Bulletin 1991/15

(60) Divisional application: 97200412.1

(73) Proprietor: SEIKO EPSON CORPORATION
Shinjuku-ku Tokyo (JP)

(72) Inventors:
• Karasawa, Johji
  Suwa-shi, Nagano-ken (JP)
• Shinozaki, Junishirou
  Suwa-shi, Nagano-ken (JP)

(74) Representative: Sturt, Clifford Mark et al
J. MILLER & CO.
34 Bedford Row,
Holborn
London WC1R 4JH (GB)

(56) References cited:
EP-A- 0 083 440          EP-A- 0 210 088

• PATENT ABSTRACTS OF JAPAN vol. 12, no. 461
  (E-689)5 December 1988 & JP-A-63 185 188
  ( CANON ) 30 July 1988
• PATENT ABSTRACTS OF JAPAN vol. 12, no. 370
  (P-767)(3217) 5 October 1988 & JP-A- 63 121 821
  ( HITACHI ) 25 May 1988
• PATENT ABSTRACTS OF JAPAN vol. 12, no. 439
  (P-788)(3286) 18 November 1988 & JP- A-63 168
  622 ( CANON ) 12 July 1988
• PATENT ABSTRACTS OF JAPAN vol. 13, no. 89
  (P-836)(3437) 2 March 1989 & JP-A-63 271 313
  ( NIKON ) 9 November 1988
• PATENT ABSTRACTS OF JAPAN vol. 12, no. 377
  (P-768)(3224) 7 October 1988 & JP-A- 63 123 018
  ( HITACHI ) 26 May 1988

Remarks:
Divisional application 97200412.1 filed on 13/02/97.

## Description

The present invention relates to a projection type liquid crystal display device, wherein a picture image is formed by a liquid crystal light valve, and is enlarged and projected by a projection lens.

Such a display device, as shown in Figure 13, is known from Japanese Laid-Open Patent No. 63-185188. In this device, a polariser 44 receives light from a light source 1 to select a desired polarised light component from a P-polarised light component and an S-polarised light component.

A spectroscopic dichroic mirror 45 separates light transmitted from the polariser 44 into three primary colours: red, green and blue. The red colour component R follows a straight light path and is reflected by light reflectors 46. The green light component G passes straight through without any change. The blue light component B follows a straight light path and is reflected by further light reflectors 46. The three light components are light modulated by corresponding liquid crystal light valves 8R, 8G and 8B, respectively. A synthesising dichroic prism 47 synthesises the modulated light and then irradiates the light onto a polarised light plate 48. The polarised light plate 48 re-selects a desired polarised light component to obtain a picture image. A projection lens 49 enlarges the picture image for projection onto a screen 13.

However, 50% of the light irradiated onto the polariser 44 is inevitably lost in such a conventional projection type liquid crystal display device, in that a desired polarised light component is selected from light from the light source 1 and is transmitted through the polariser 44 while an undesired polarised light component is absorbed in the polariser 44. Moreover, a desired brightness cannot be provided with a polariser having 80% transmittance in spite of a high luminance intensity of the light source.

Further, the polariser 44 is placed just near to the light source 1 and is affected by heat absorption in that the ability of the polariser to polarise light varies, hindering stable reliability of the device under a wide range of ambient temperatures. A high revolution type of cooling fan with high cooling capability is required to obtain stable reliability of the device. However, such a cooling fan generates considerable noise, so a projection type liquid crystal display device, which can be applied to current audio and video appliances, cannot be achieved.

JP-A-63121821 discloses an arrangement in which light from a light source is split into separate P and S wave components by a polarising element. The P wave component is converted to an S wave by a λ/2 plate. The converted S wave is reflected by a mirror onto a liquid crystal element together with the original S wave.

It is an object of the present invention to provide a projection type liquid crystal display device which is able to realise a high intensity picture image by utilising a maximum light flux from the light source.

According to one aspect of the invention there is provided a projection type liquid crystal display device having a light source, polarising means for polarising the light beam from the light source, light separation means for separating the light beam from said polarising means into primary light colour beams, a liquid crystal light valve for modulating the light beams from said light separation means, light synthesising means for combining the modulated light beams from said liquid crystal light valve in a single light beam, and a projection lens for projecting the light beam from said light synthesising means,
characterised in that:

said polarising means comprises:

a polarising beam splitter arranged to separate the incident light beam from the light source into two light beams having mutually perpendicular linear polarisation directions which travel along respective optical paths, and for each of the two linearly-polarised light beams, at least two reflecting mirrors arranged to convert the two light beams into two light beams having the same polarisation direction and parallel optical paths so that each beam irradiates a respective half of said liquid crystal light valve in a substantially parallel manner, wherein the number of times that one of the two light beams is reflected along its optical path between the polarising beam splitter and the light separation means is equal to the number of times that the other of the two light beams is reflected along its optical path between the polarising beam splitter and the light separation means.

According to another aspect of the invention there is provided a projection type liquid crystal display device having a light source, polarisation means for polarising the light beams from the light source, light separation means for separating the light beam from said polarising means into primary light colour beams, a liquid crystal light valve for modulating the light beams from said light separation means, light synthesising means for combining the modulated light beams from said liquid crystal light valve in a single light beam, and a projection lens for projecting the light beam from said light synthesising means, characterised in that:

said polarising means comprises:
a polarising beam splitter arranged to separate the incident light beam from the light source into two light beams having mutually perpendicular linear polarisation directions, which travel along respective optical paths, one of the linearly-polarised light beams is made to pass through a wavelength plate so as to be polarisation-converted to have the same direction of polarisation as the other of said linearly-polarised light beams, the two linearly-polarised light beams are then directed to two adjacent surfaces of a wedge-shaped reflecting mirror by reflecting mirrors so as to be reflected in parallel optical path so that each beam irradiates a respective half of said liquid crystal light valve in a substantially parallel manner, wherein the number of times that one of the two light beams is reflected in its optical path between the polarising beam splitter and the light separation means is equal to the number of times that the other of the two light beams is reflected along its optical path between the polarising beam splitter and the light separation means.

In one embodiment of the present invention, a cubic polariser which comprises a pair of right angled prisms is provided as the polarising beam splitter, the sloping surfaces of the prisms each having a dielectric laminated coating layer and being adhered to each other. In another embodiment, the polarising beam splitter comprises a single glass plate, or a plurality of glass plates laminated in parallel, arranged at a polarisation angle with respect to the angle of the incident light.

In the case where a cubic polariser is used as the polarising beam splitter, if light is irradiated at 45° with respect to the sloping surfaces coated with the dielectric laminated coating layer, the incident light can be separated into a P-polarised light component and an S-polarised light component with more than 98% precision attained. In the case where laminated glass plates are utilised as the polarising beam splitter and are arranged so that the light incident angle is fixed to be equal to the polarisation angle, the polarising beam splitter may transmit 100% of the P-polarised light component and reflect the S-polarised light component in accordance with the number of plates, so that the incident light can be accurately separated into P-polarised light and S-polarised light.

The polarisation direction converting means may variously comprise one or a plurality of light reflectors, a λ/4 plate, or a λ/2 plate.

The separated and polarised light components are advantageously optically oriented geometrically by reflection by the light reflector(s) or by passing through either the λ/4 plate or the λ/2 plate, so that they are irradiated onto the liquid crystal light valve as a desired polarised light component for projecting a picture image.

Preferably, both of the polarised light components are irradiated substantially in parallel by means of a wedge type light reflector.

The light intensity variation is effectively improved by substantially equalling the distances to the liquid crystal light valve from the separation region of the P- and S-polarised light components by using the wedge type light reflector.

Advantageously, the two polarised light components, which are irradiated substantially in parallel, are condensed by means of a lens for transmission to the light separation means.

As mentioned above, the polarising beam splitter may separate incident light from the light source into P- and S-polarised light components, and the polarisation direction converting means may transmit the components substantially in parallel such that the area of illumination of the parallel irradiation is twice that of the light before the separation. By condensing the two parallel polarised light components with a combination of a convex lens and a concave lens, a smaller aperture for the liquid crystal light valve can be employed with a larger light source, which is useful for effectively utilising the light flux from the light source.

Separate halves of the aperture of the liquid crystal light valve may conveniently be irradiated by each of the polarised light components.

More effective utilisation of the light flux from the light source can be realised if the two polarised light components are set so that they each irradiate half of the aperture of the liquid crystal light valve.

The liquid crystal display device described below provides high reliability under a wide range of ambient temperatures, and achieves such a low noise that it is readily applicable to current audio and video apparatus.

The invention is described further, by way of example, with reference to the accompanying drawings, in which:-

Figure 1 is a diagrammatic view of a liquid crystal display device according to the present invention;

Figure 2 is a diagrammatic perspective view of a polarising beam splitter of the display device of Figure 1, in the form of a cubic polariser;

Figure 3 is a diagrammatic view showing a further polarising beam splitter in the form of a glass plate;

Figure 4 is a diagram showing the relationship between the number of glass plates and degree of polarisation in a polarising beam splitter using glass plates;

Figure 5 is a diagrammatic perspective view of a polarisation direction converter of the display device of Figure 1, employing light reflectors;

Figure 6 is a diagrammatic view of another polarisation direction converter employing a λ/4 plate;

Figure 7 is a diagram illustrating the principle of operation of the polarisation direction converter of Figure 6;

Figure 8 is a diagrammatic view of a further polarisation direction converter, employing a λ/2 plate;

Figure 9 is a diagram illustrating the principle of operation of the polarisation direction converter of Figure 8;

Figure 10 is a diagrammatic view of an alternative polarisation direction converter not in accordance with the invention, the converter employing a λ/2 plate;

Figure 11 is a diagrammatic view of an alternative prior art polarisation direction converter not in accordance with the present invention, the converter employing a λ/2 plate;

Figure 12 is a diagrammatic view of an embodiment of liquid crystal display device not in accordance with the present invention, the device having a combination lens just behind the polarisation direction converter of Figure 11; and

Figure 13 is a diagrammatic view of a prior art projection type liquid crystal display device.

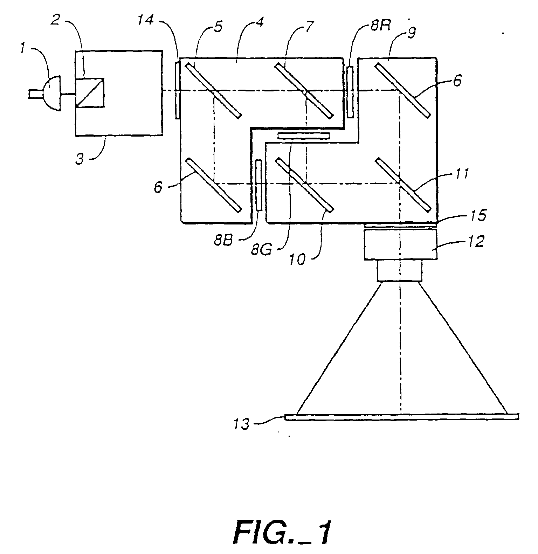

The display device shown in Figure 1 has a light source 1 comprising a high colour rendering lamp, such as a halogen lamp, a xenon lamp or a metal halide lamp. A polarising beam splitter 2 receives light from the light source 1. A P-polarised light component passes through the polarising beam splitter 2 and an S-polarised light component is reflected at a reflective surface of the polarising beam splitter 2. A polarisation direction converter 3 receives both of the P- and S-polarised light components from the polarising beam splitter 2 and unifies them into either P- or S- polarised light for sending substantially in parallel to light separation means 4. A blue colour reflective dichroic mirror 5 receives both of the polarised light components and reflects blue coloured light (less than 500 nm) and transmits other coloured light (yellow colour). A light reflector 6 deflects the reflected blue coloured light to a blue colour liquid crystal light valve 8B. The other coloured light transmitted through the dichroic mirror 5 is received by a green colour light reflective dichroic mirror 7, which reflects green coloured light (between about 500 nm to about 600 nm), and transmits red coloured light (more than about 600 nm). The reflected green coloured light enters a green liquid crystal light valve 8G, while the transmitted red coloured light enters a red liquid crystal light valve 8R. The liquid crystal light valves 8R, 8G and 8B modulate optically the respective coloured light to form a picture image for each of the colours according to the amplitude of an applied signal voltage. The liquid crystal light valves 8R, 8G and 8B perform a shutter function for controlling the transmittance of incident light. In addition to an active matrix liquid crystal panel and a simple matrix liquid crystal panel, the liquid crystal panel may be one which can vary the transmittance in response to signal voltages.

The liquid crystal light valves 8R, 8G and 8B modulate optically the coloured light for input to light synthesising means 9. The blue coloured light is transmitted through a blue colour transmitting dichroic mirror 10 and then is reflected by a red colour transmitting dichroic mirror 11. The green coloured light is reflected by the blue colour transmitting dichroic mirror 10 and the red colour transmitting dichroic mirror 11. The red coloured light is reflected by a further light reflector 6 and is then transmitted by the red colour transmitting dichroic mirror 11. A projecting lens 12 receives colour synthesised light obtained in the above manner to project an enlarged image on a front screen 13.

The liquid crystal light valves 8R, 8G and 8B can be replaced by arranging the corresponding dichroic mirrors to obtain the light separation and the light synthesis in the same manner as above.

The liquid crystal light valves 8R, 8G and 8B can display a picture image by selecting the polarised light component using the polarisers 14 and 15. However, the polarising beam splitter 2 which has a degree of polarisation of nearly 100% does not need the polariser 14, which is used simply as an auxiliary polariser for the polarising beam splitter 2.

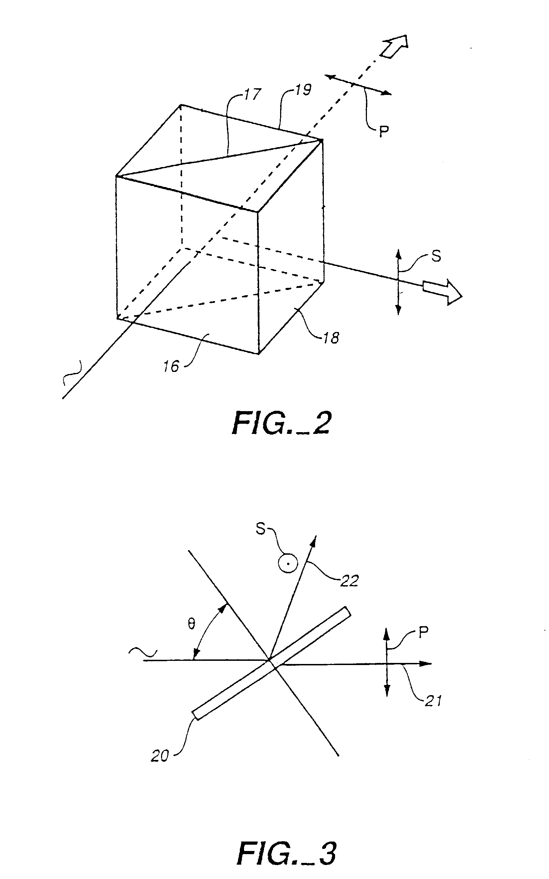

Figure 2 is a diagram showing a polarising beam splitter in the form of a cubic polariser comprising a pair of right angled prisms. A dielectric layer formed by laminating alternately a high refractive index material and a low refractive index material is coated on the sloping surface of each of the two right angled prisms. The polariser is formed by joining the sloping surfaces with an adhesive. The non-polarised light is applied at 0° with respect to an outer surface 16 of the cubic polariser (or at 45° with respect to the dielectric laminated coating layer 17 of the adhered interface) and is separated into a P-polarised light component and a S-polarised light component, which are perpendicular with respect to each other, at the dielectric laminated coating layer 17. The two components are emitted separately from two outer surfaces 18 and 19, respectively, of the cubic polariser at an accurate angle of 90°. That is, the P-polarised light component of the incident light beam which enters the cubic polariser at a polarisation angle passes through each interface between the laminations of the coating layer 17 totally without reflection. Although the S-polarised light component is reflected partially at each of the interfaces, the total reflectance becomes finally more than 98% because of the great number of the interfaces. Therefore, when a cubic polariser is used as a polarising beam splitter 2, the polariser 14 shown in Figure 1 can be removed.

The polarised ligh component separation in the cubic polariser shown in Figure 2 uses a similar principle as a polarising beam splitter in the form of a glass plate as described below.

Figure 3 is a diagram illustrating the principle of a polarising beam splitter employing a glass plate 20. The glass plate 20 has a thickness of about 1 mm. When the glass plate 20 is arranged to suit the following condition:

$$\theta = \tan^{-1} (n2 / n1)$$

where

n2 is the refractive index of the glass plate 20,
n1 is the refractive index of a medium through which the incident light passes before the glass plate 20, and
θ is the angle of incidence of the light,

100% of the P-polarised light component 21 passes through and about 15% of the S-polarised light component 22 is reflected by the glass plate (θ is the polarisation angle in this case). Hence, in the case where a plurality of the glass plates 20 are laminated in parallel, ideally 100% of the P-polarised light component 21 is transmitted and 100% of the S-polarised light component 22 is reflected.

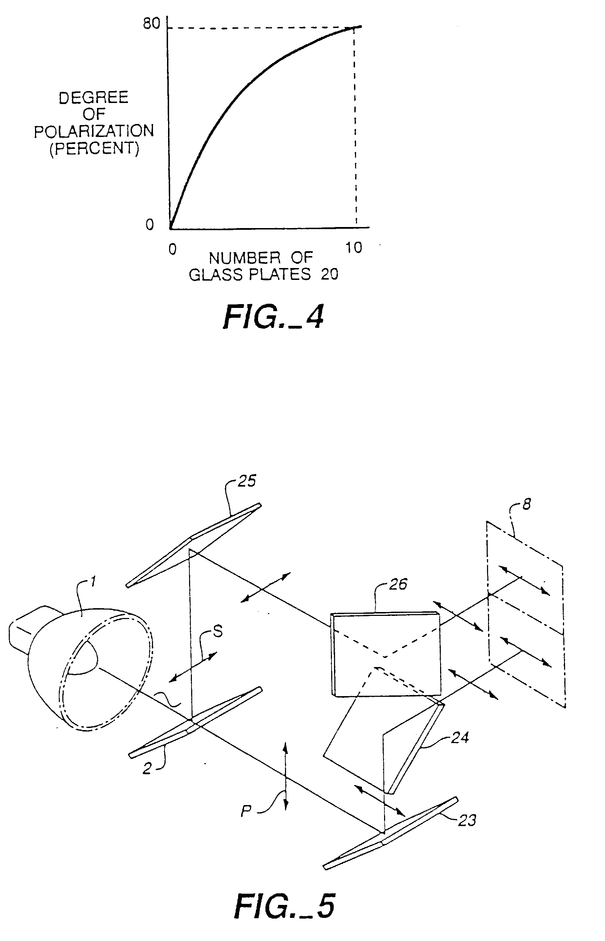

Figure 4 shows the relationship between the number of glass plates 20 indicated along the abscissa and the degree of polarisation indicated along the ordinate as obtained by actual measurements. About an 80% degree of polarisation can be achieved with eight to ten glass plates, with about 30% of the S-polarised light component being absorbed, whereby a temperature rise of the polariser can be minimised.

Figure 5 shows an embodiment in which light reflectors are used as the polarisation direction converter 3. The polarising beam splitter 2 separates light from the light source 1 into a P-polarised light component being transmitted light, and an S-polarised light component being reflected light. The travelling direction and the polarising direction of the P-polarised light are converted by light reflectors 23 and 24. The travelling direction of the S-polarised light component is changed by light reflectors 25 and 26. The two light components travel substantially in the same direction and in parallel and are converted into polarised light in the same polarising direction, to be irradiated in parallel. That is, the polarised light which is separated into P- and S-polarised light components can be emitted substantially in parallel by orienting the travelling direction and the polarisation direction by means of a combination of geometric optical reflective direction characteristics. Both of the polarised light components are illuminated separately on a respective half of the aperture of the liquid crystal light valve 8, as shown in Figure 5.

In the present embodiment and the following five embodiments, the cubic polariser or a glass plate polariser may be selected as the polarising beam splitter 2. The above mentioned arrangement performs image formation and image projection after the parallel emission. The arrangement of the light reflectors can orient the emitted light into a P-polarised light component and can select between vertical parallel emitted light or horizontal parallel emitted light.

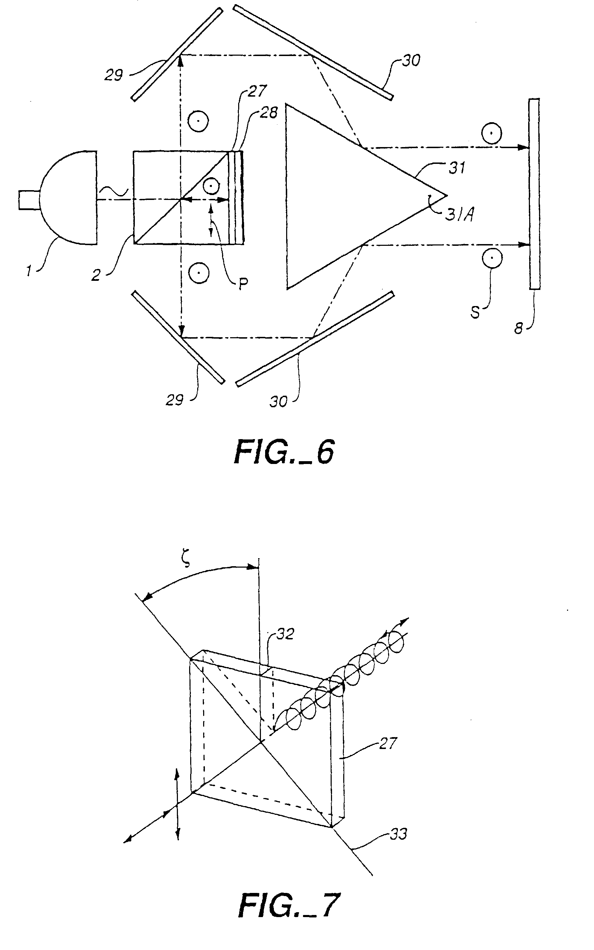

Figure 6 is a diagram showing another embodiment using a λ/4 plate as the polarisation direction converter 3 according to the present invention. The polarising beam splitter 2 separates emitted light from the light source into a P-polarised light component being transmitted light and an S-polarised light component being reflected light. The λ/4 plate 27 transmits the P-polarised light component, converting the straight polarised light into circular polarised light. Front reflection means 28 reflect the circular polarised light to reverse its propagation direction. Then, the light is re-converted into straight polarised light by being re-transmitted into the λ/4 plate 27. The light is thus converted into an S-polarised light component, which is perpendicular to the polarised light first entering into the λ/4 plate 27, and then goes back to the polarising beam splitter 2. The S-polarised light component which is returned to the polarising beam splitter 2 is deflected at the reflective surface of the polarising beam splitter 2 and then passes to a wedge type light reflector 31 after repeated reflection at reflection means 29 and 30.

On the other hand, the S-polarised light component which is initially reflected at the reflective surface of the polarising beam splitter 2 is symmetrically reflected with respect to the foregoing S-polarised light component transmitted through the λ/4 plate about the light axis of the light source by further reflection means 29 and 30. The S-polarised light component then passes to the wedge type light reflector 31 and is deflected by the wedge type light reflector 31 together with the above mentioned converted S-polarised light component to be emitted substantially in parallel, and they are illuminated separately onto the aperture of the liquid crystal light valve 8. The wedge type light reflector 31 has a wedge type body formed of a metal, such as aluminium or stainless steel, and a high reflection mirror coating, such as a metal coating and a dielectric laminated coating layer, formed on the surface of the body.

Figure 7 is a diagram illustrating the principle of the λ/4 plate 27. When an angle $^S$, which is made by the polarised light plane 32 of the incident light and the crystal light axis 33 of the λ/4 plate 27, is 45°, the λ/4 plate 27 converts incident straight polarised light into circular polarised light, or vice versa.

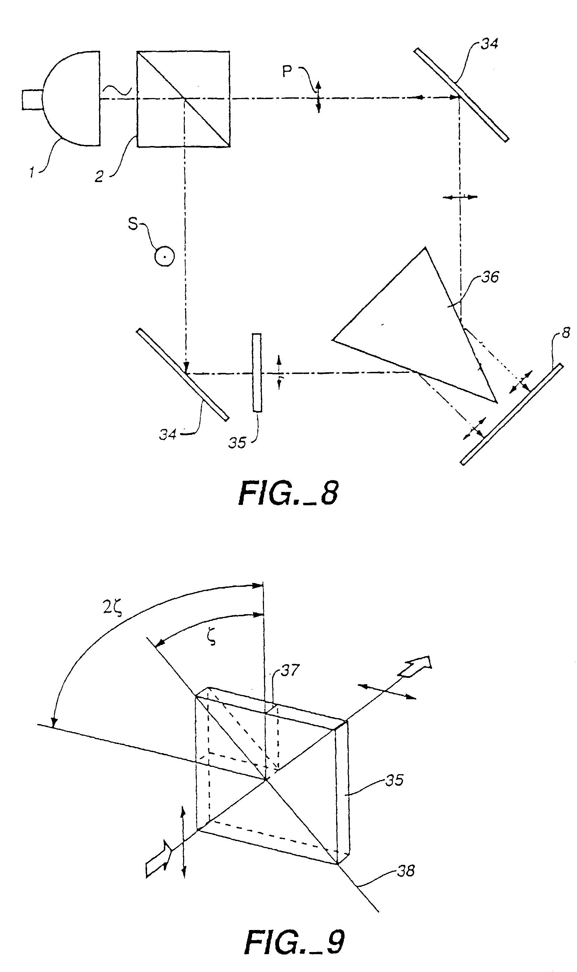

Figure 8 shows another embodiment according to the present invention using a λ/2 plate as the polarisation direction converter 3. The polarising beam splitter 2 separates the light from the light source 1 into a P-polarised light component being transmitted light and an S-polarised light component being reflected light. A light reflector 34 deflects the reflected S-polarised light component to a λ/2 plate 35, which rotates the polarised light surface through 90° to produce a P-polarised light component for transmission to a wedge type light reflector 36. On the other hand, another light reflector 34 deflects the transmitted P-polarised light component to the wedge type light reflector 36. The wedge type light reflector 36 irradiates the two P-polarised light components substantially in parallel and separately to the aperture of the liquid crystal light valve 8. In order to transmit both of the polarised light components substantially in parallel oriented into a single polarised light component, the λ/2 plate 35 may also be arranged in the light path of the S-polarised light component entering the light reflector 34. Alternatively, it may be arranged in the light path of the P-polarised light component entering or leaving the other light reflector 34, if an S-polarised light component is to be supplied to the liquid crystal light valve 8. According to the present embodiment, the wedge type light reflector 36 is used in a similar manner to that of the embodiment of Figure 6. In both cases, the length of the light path from the polarising beam splitter 2 to the liquid crystal light valve 8 is substantially equal for both the polarised light components. As is clear from the Figures, both of the wedge type light reflectors 31 and 36 enable a substantially equal and shortest length of light path to be realised, whereby to prevent an occurrence of a split between the two oriented light components. Therefore, the wedge type light reflector is effectively utilised to realise a bright projected picture image with reduced unevenness.

Figure 9 is a diagram showing the principle of the $\lambda/2$ plate 35. When the angle S which is made by the polarised light plane 37 of the incident light and the crystal light axis 38 of the $\lambda/2$ plate is 45°, the $\lambda/2$ plate 35 rotates the polarisation plane of the incident polarised light through 90° so that the P- (or S-) polarised light component is converted into an S-(or P-) polarised light component.

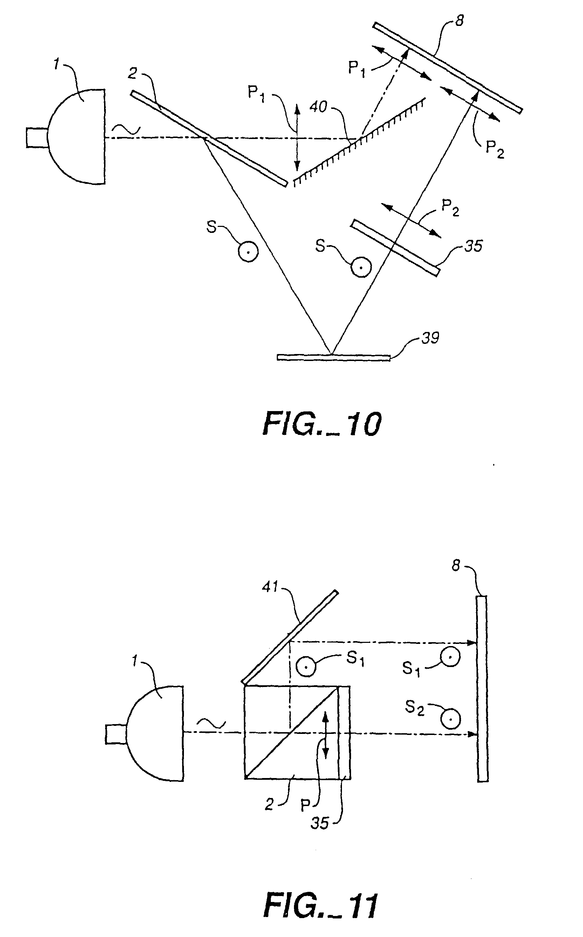

Figure 10 is a diagram showing another arrangement, not part of the invention, using the $\lambda/2$ plate 35 as the polarisation direction converter 3. The polarising beam splitter 2 separates the light from the light source 1 into a P-polarised light component being transmitted light and an S-polarised light component being reflected light. A light reflector 39 deflects the S-polarised light component to the $\lambda/2$ plate 35. The $\lambda/2$ plate 35 rotates the polarised light plane through 90° to convert it into a P-polarised light component which travels straight ahead to the liquid crystal light valve 8. A light reflector 40 also reflects the P-polarised light component from the polarising beam splitter 2 to the aperture of the liquid crystal light valve 8. The P-polarised light components are irradiated together in parallel and without any space between them in the same direction.

According to this arrangement, in order to project both of the polarised light components substantially in parallel and oriented respectively in a single polarising direction, the $\lambda/2$ plate 35 may be arranged either in front of the light reflector 39, or in front or to the rear of the light reflector 40.

Figure 11 is a diagram showing a converter using a $\lambda/2$ plate 35 as the polarisation direction converter 3. The polarising beam splitter 2 separates the light from the light source 1 into a P-polarised light component being transmitted light and an S-polarised light component being reflected light. The $\lambda/2$ plate 35 is arranged close to the polarising beam splitter 2. The transmitted P-polarised light component is rotated through 90° after passing through the $\lambda/2$ plate 35 so that it is converted into an S-polarised light component travelling straight ahead. The S-polarised light component reflected by the polarising beam splitter 2 is reflected by a light reflector 41 in the same direction as that of the other S-polarised light component, whereby the two S-polarised light components are separately projected substantially in parallel and without any space between them onto the aperture of the liquid crystal light valve 8.

In this case, a similar function can be obtained by arranging the $\lambda/2$ plate 35 in the light path of the S-polarised light component.

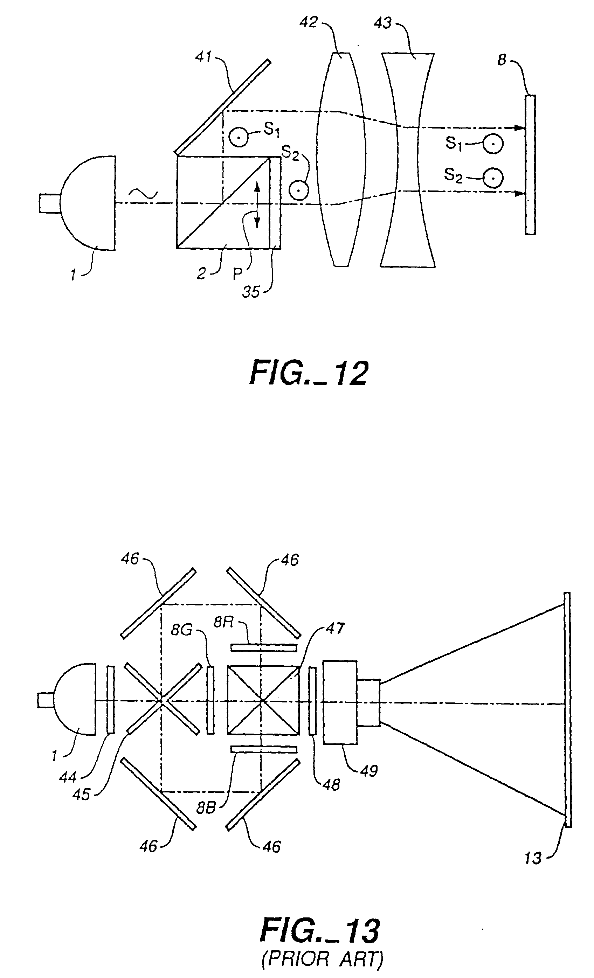

Figure 12 shows an arrangement in which a combination of a convex lens 42 and a concave lens 43 is arranged immediately after the polarisation direction converter 3 shown in Figure 11. This configuration can be applied similarly in the other arrangement. The vertical cross sectional area of the light emitted in parallel from the polarisation direction converter 3 is approximately twice that of the light from the light source 1. Therefore, in order to utilise the light from the light source 1 effectively, the aperture area of the liquid crystal light valve 8 is required to be enlarged to be nearly twice as large as the vertical cross sectional area of the light emitted from the light source 1. The present arrangement may provide a bright and compact liquid crystal display device by employing a smaller liquid crystal light valve in combination with a larger light source. In the manner shown in the foregoing embodiments, the parallel light emitted by the polarisation direction converter 3 is condensed by the convex lens 42 and re-converted to a parallel beam by the concave lens 43, so that the light from the concave lens 43 is changed into a parallel light with a small cross sectional area by comparison with that of the light entering the convex lens 42 and can be irradiated separately onto the liquid crystal light valve 8. Further, if the aspect ratio of the liquid crystal light valve 8 is 4:3 or 16:9 in the above mentioned embodiments the longer the sideways aperture the liquid crystal light valve 8 has, the more the half-separating irradiation shows notable effect. The half-separation irradiation of the present invention provides an improved illumination ratio for the picture image as well as a brighter picture image.

As described in the above embodiments, almost all of the light flux generated from the light source 1 can enter the aperture of the liquid crystal light valve 8. The light source 1 and the polariser 14 are arranged at a proper distance so that the polariser 14 is outside the influence of heat from the light source 1 on the absorption of the polarised light component. A low revolution type cooling fan can provide stable reliability for the device under a wide range of ambient temperatures. Therefore, a high revolution type cooling fan with high cooling capability is not required. With respect to the temperature condition, it is preferable to remove the polariser 14.

As is described above, a projection type liquid crystal display device according to the present invention is constructed such that light emitted from a light source is separated into a P-polarised light component and an S-polarised light component by a polarising beam splitter, both of the polarised light components are directed in the same polarising direction and substantially in parallel, and a picture image is projected by separately projecting the components onto the aperture of a liquid crystal light valve, whereby most of the light sent from the light source can be incident onto the aperture of the liquid crystal light valve and a high intensity picture image can be realised by utilising the maximum light flux from the light source.

In addition, since the incident side polariser 14 is placed at a proper distance from the light source and beyond the influence of heat on the absorption of the unnecessary polarised light component, a low revolution type cooling fan performs satisfactorily in the present invention. An improved projection type liquid crystal display device having stable reliability under a wide range of ambient temperatures and suitable for current audio and video devices can thus be provided.

**Claims**

1. A projection type liquid crystal display device having a light source (1), polarising means (2, 3) for polarising the light beam from the light source, light separation means (4) for separating the light beam from said polarising means into primary light colour beams, a liquid crystal light valve (8) for modulating the light beams from said light separation means, light synthesising means (9) for combining the modulated light beams from said liquid crystal light valve in a single light beam, and a projection lens (12) for projecting the light beam from said light synthesising means, characterised in that:

   said polarising means comprises:
   a polarising beam splitter (2, 20) arranged to separate the incident light beam from the light source into two light beams (P,S) having mutually perpendicular linear polarisation directions which travel along respective optical paths, and for each of the two linearly-polarised light beams, at least two reflecting mirrors (23-26) arranged to convert the two light beams into two light beams having the same polarisation direction and parallel optical paths so that each beam irradiates a respective half of said liquid crystal light valve (8) in a substantially parallel manner, wherein the number of times that one of the two light beams (P,S) is reflected along its optical path between the polarising beam splitter and the light separation means (4) is equal to the number of times that the other of the two light beams is reflected along its optical path between the polarising beam splitter (2, 20) and the light separation means (4).

2. A projection type liquid crystal display device having a light source (1), polarisation means (2, 3) for polarising the light beams from the light source, light separation means (4) for separating the light beam from said polarising means into primary light colour beams, a liquid crystal light valve (8) for modulating the light beams from said light separation means, light synthesising means (9) for combining the modulated light beams from said liquid crystal light valve in a single light beam, and a projection lens (12) for projecting the light beam from said light synthesising means, characterised in that:

   said polarising means comprises:
   a polarising beam splitter (2,20) arranged to separate the incident light beam from the light source into two light beams (P,S) having mutually perpendicular linear polarisation directions, which travel along respective optical paths, one of the linearly-polarised light beams is made to pass through a wavelength plate (27, 35) so as to be polarisation-converted to have the same direction of polarisation as the other of said linearly-polarised light beams, the two linearly-polarised light beams are then directed to two adjacent surfaces of a wedge-shaped reflecting mirror (31, 36) by reflecting mirrors (29, 30, 34) so as to be reflected in parallel optical paths so that each beam irradiates a respective half of said liquid crystal light valve (8) in a substantially parallel manner, wherein the number of times that one of the two light beams is reflected in its optical path between the polarising beam splitter (2, 20) and the light separation means (4) is equal to the number of times that the other of the two light beams is reflected along its optical path between the polarising beam splitter (2, 20) and the light separation means (4).

3. A projection type liquid crystal display device according to claim 1 or 2, wherein said polarising beam splitter (2, 20) includes a cubic polariser (2) which is composed of a pair of rectangular prisms which are bonded together at their slant surfaces by an adhesive.

4. A projection type liquid crystal display device according to claim 1 or 2, wherein said polarising beam splitter (2, 20) includes a plurality of glass sheets (20) laminated in parallel manner and arranged such that the angle of incidence of the light to said glass sheets or sheet is equal to Brewster's angle.

5. A projection type liquid crystal display device according to claim 1 or 2, wherein said polarising beam splitter (2) includes a polariser formed of a plane

6. A projection type liquid crystal display device according to claim 1 or 2, wherein said polarising beam splitter (2, 20) comprises at least one glass plate (20).

7. A projection type liquid crystal display device according to claim 2 or any of claims 3 to 6 when dependent on claim 2, characterised in that the optical path lengths traversed by each of the two light components (P, S) between the polarising separation means and the liquid crystal light valve are substantially equal.

8. A projection type liquid crystal display device according to claim 2 or any of claims 3 to 6 when dependent on claim 2, characterised in that the optical path lengths traversed by each of the two light components (P, S) between said light source and said liquid crystal light valve 8 are substantially identical.

9. A projection type liquid crystal display device according to claim 1 or any of claims 3 to 6 when dependent on claim 1, characterised in that the separated two linearly polarised light components are polarisation converted by reflecting mirrors only, the arrangement being such that no wavelength plate is required for the polarisation conversion.

**Patentansprüche**

1. Flüssigkristallanzeigevorrichtung des Projektionstyps mit einer Lichtquelle (1), einem Polarisiermittel (2, 3) zum Polarisieren des Lichtstrahls von der Lichtquelle, einem Lichtteilungsmittel (4) zum Teilen des Lichtstrahls von dem Polarisiermittel in Lichtprimärfarbenstrahlen, einem Flüssigkristalllichtventil (8) zum Modulieren der Lichtstrahlen von dem Lichtteilungsmittel, einem Lichtsynthetisiermittel (9) zum Kombinieren der modulierten Lichtstrahlen von dem Flüssigkristallichtventil zu einem einzigen Lichtstrahl sowie mit einer Projektionslinse (12) zum Projizieren des Lichtstrahls von dem Lichtsynthetisiermittel,
**dadurch gekennzeichnet**, daß das Polarisiermittel umfaßt:
einen polarisierenden Strahlteiler (2, 20), der zum Trennen des einfallenden Lichtstrahls von der Lichtquelle in zwei Lichtstrahlen (P, S) mit zueinander orthogonalen linearen Polarisationsrichtungen angeordnet ist, die sich entlang eines jeweiligen optischen Weges ausbreiten, sowie - für jeden der beiden linear polarisierten Lichtstrahlen - wenigstens zwei Reflektionsspiegel (23 - 26), die zum Umwandeln der beiden Lichtstrahlen in zwei Lichtstrahlen mit der gleichen Polarisationsrichtung und parallelen optischen Wegen angeordnet sind, so daß jeder Strahl eine jeweilige Hälfte des Flüssigkristallichtventils (8) im wesentlichen parallel bestrahlt, wobei die Anzahl, wie oft einer der beiden Lichtstrahlen (P, S) entlang seines optischen Weges zwischen dem polarisierenden Strahlteiler und dem Lichtteilungsmittel (4) reflektiert wird, gleich der Anzahl ist, wie oft der andere der beiden Lichtstrahlen entlang seines optischen Weges zwischen dem polarisierenden Strahlteiler (2, 20) und dem Lichtteilungsmittel (4) reflektiert wird.

2. Flüssigkristallanzeigevorrichtung des Projektionstyps mit einer Lichtquelle (1), einem Polarisiermittel (2, 3) zum Polarisieren des Lichtstrahls von der Lichtquelle, einem Lichtteilungsmittel (4) zum Teilen des Lichtstrahls von dem Polarisiermittel in Lichtprimärfarbenstrahlen, einem Flüssigkristalllichtventil (8) zum Modulieren der Lichtstrahlen von dem Lichtteilungsmittel, einem Lichtsynthetisiermittel (9) zum Kombinieren der modulierten Lichtstrahlen von dem Flüssigkristallichtventil zu einem einzigen Lichtstrahl sowie mit einer Projektionslinse (12) zum Projizieren des Lichtstrahls von dem Lichtsynthetisiermittel,
**dadurch gekennzeichnet**, daß das Polarisiermittel umfaßt:
einen polarisierenden Strahlteiler (2, 20), der zum Trennen des einfallenden Lichtstrahls von der Lichtquelle in zwei Lichtstrahlen (P, S) mit zueinander orthogonalen linearen Polarisationsrichtungen angeordnet ist, die sich entlang eines jeweiligen optischen Weges ausbreiten, wobei einer der linear polarisierten Lichtstrahlen durch eine Wellenlängenplatte (27, 35) passieren gelassen wird, so daß er polarisationsumgewandelt wird, um die gleiche Polarisationsrichtung wie der andere der linear polarisierten Lichtstrahlen aufzuweisen, wobei die beiden linear polarisierten Lichtstrahlen dann derart auf zwei benachbarte Oberflächen eines keilförmigen Reflektionsspiegels (31, 36) durch Reflektionsspiegel (29, 30, 34) gerichtet werden, daß sie in parallele optische Wege reflektiert werden, so daß jeder Strahl eine jeweilige Hälfte des Flüssigkristalllichtventils (8) im wesentlichen parallel bestrahlt, wobei die Anzahl, wie oft einer der beiden Lichtstrahlen auf seinem optischen Weg zwischen dem polarisierenden Strahlteiler (2, 20) und dem Lichtteilungsmittel (4) reflektiert wird, gleich der Anzahl ist, wie oft der andere der beiden Lichtstrahlen entlang seines optischen Weges zwischen dem polarisierenden Strahlteiler (2, 20) und dem Lichtteilungsmittel (4) reflektiert wird.

3. Flüssigkristallanzeigevorrichtung des Projektionstyps nach Anspruch 1 oder 2, bei der der polarisierende Strahlteiler (2, 20) einen kubischen Polarisator (2) umfaßt, der aus einem Paar von rechtwinkligen Prismen zusammengesetzt ist, die an ihren schrägen Oberflächen durch einen Klebstoff zusammengeklebt sind.

4. Flüssigkristallanzeigevorrichtung des Projektionstyps nach Anspruch 1 oder 2, bei der der polarisierende Strahlteiler (2, 20) eine Mehrzahl von Glasplatten (20) umfaßt, die parallel geschichtet und derart angeordnet sind, daß der Lichteinfallwinkel auf die Glasplatten oder die Glasplatte gleich dem Brewster-Winkel ist.

5. Flüssigkristallanzeigevorrichtung des Projektionstyps nach Anspruch 1 oder 2, bei dem der polarisierende Strahlteiler (2) einen aus einem planen Reflektionsspiegel gebildeten Polarisator umfaßt, wobei eine Oberfläche desselben mit einer geschichteten dielektrischen Beschichtung versehen ist.

6. Flüssigkristallanzeigevorrichtung des Projektionstyps nach Anspruch 1 oder 2, bei der der polarisierende Strahlteiler (2, 20) wenigstens eine Glasplatte (20) umfaßt.

7. Flüssigkristallanzeigevorrichtung des Projektionstyps nach Anspruch 2 oder einem der Ansprüche 3 bis 6, wenn dieser von Anspruch 2 abhängt, dadurch gekennzeichnet, daß die durch jeden der beiden linear polarisierten Lichtstrahlen (P, S) zwischen dem polarisierenden Teilungsmittel und dem Flüssigkristallichtventil durchquerten optischen Weglängen im wesentlichen gleich sind.

8. Flüssigkristallanzeigevorrichtung des Projektionstyps nach Anspruch 2 oder einem der Ansprüche 3 bis 6, wenn dieser von Anspruch 2 abhängt, dadurch gekennzeichnet, daß die durch jeden der beiden linear polarisierten Lichtstrahlen (P, S) zwischen der Lichtquelle und dem Flüssigkristallichtventil durchquerten optischen Weglängen im wesentlichen identisch sind.

9. Flüssigkristallanzeigevorrichtung des Projektionstyps nach Anspruch 1 oder einem der Ansprüche 3 bis 6, wenn dieser von Anspruch 1 abhängt, dadurch gekennzeichnet, daß die beiden linear polarisierten Lichtstrahlen nur durch Reflektionsspiegel polarisationsumgewandelt werden, wobei die Anordnung derart ist, daß keine Wellenlängenplatte für die Polarisationsumwandlung erforderlich ist.

**Revendications**

1. Appareil d'affichage à cristaux liquides de type projecteur comportant une source lumineuse (1), un moyen de polarisation (2, 3) pour polariser le faisceau lumineux provenant de la source lumineuse, un moyen de séparation de lumière (4) pour séparer le faisceau lumineux provenant dudit moyen de polarisation en des faisceaux lumineux primaires colorés, un relais variateur de lumière (8) à cristaux liquides pour moduler les faisceaux lumineux provenant dudit moyen de séparation de lumière, un moyen de synthétisation de lumière (9) pour combiner les faisceaux lumineux modulés provenant dudit relais variateur de lumière à cristaux liquides en un unique faisceau lumineux et une lentille de projection (12) pour projeter le faisceau lumineux provenant dudit moyen de synthétisation de lumière, caractérisé en ce que ledit moyen de polarisation comprend : un dispositif de décomposition de faisceau polarisant (2, 20) conçu pour séparer le faisceau lumineux incident provenant de la source lumineuse en deux faisceaux lumineux (P, S), ayant des directions de polarisation linéaires mutuellement perpendiculaires, qui cheminent le long de trajets optiques respectifs et, pour chacun des deux faisceaux lumineux polarisés linéairement, au moins deux miroirs réflecteurs (23-26) conçus pour convertir les deux faisceaux lumineux en deux faisceaux lumineux ayant la même direction de polarisation et des trajets optiques parallèles, se sorte que chaque faisceau fait rayonner une moitié respective dudit relais variateur de lumière ( 8 ) à cristaux liquides d'une manière sensiblement parallèle, le nombre de fois où l'un des deux faisceaux lumineux (P, S) est réfléchi le long de son trajet optique entre le dispositif de décomposition de faisceau polarisant et le moyen de séparation de lumière (4) étant égal au nombre de fois où l'autre des deux faisceaux lumineux est réfléchi le long de son trajet optique entre le dispositif de décomposition de faisceau polarisant (2, 20) et le moyen de séparation de lumière (4).

2. Appareil d'affichage à cristaux liquides de type projecteur comportant une source lumineuse (1), un moyen de polarisation (2, 3) pour polariser le faisceau lumineux provenant de la source lumineuse, un moyen de séparation de lumière (4) pour séparer le faisceau lumineux provenant dudit moyen de polarisation en des faisceaux lumineux primaires colorés, un relais variateur de lumière (8) à cristaux liquides pour moduler les faisceaux lumineux provenant dudit moyen de séparation de lumière, un moyen de synthétisation de lumière (9) pour combiner les faisceaux lumineux modulés provenant dudit relais variateur de lumière à cristaux liquides en un unique faisceau lumineux et une lentille de projection (12) pour projeter le faisceau lumineux provenant dudit moyen de synthétisation de lumière, caractérisé en ce que ledit moyen de polarisation comprend : un dispositif de décomposition de faisceau polarisant (2, 20) conçu pour séparer le faisceau lumineux incident provenant de la source lumineuse en deux faisceaux lumineux (P, S), ayant des directions de polarisation linéaires mutuellement perpendiculaires, qui cheminent le long de trajets optiques respectifs, l'un des faisceaux lumineux polarisés linéairement étant réalisé de façon à passer à travers une plaque de longueur d'onde (27, 35), de sorte qu'il subit une conversion de polarisation lui permettant d'avoir la même direction de polarisation que l'autre desdits faisceaux lumineux polarisés linéairement, les deux faisceaux lumineux étant ensuite dirigés vers deux surfaces adjacentes d'un miroir réflecteur cunéiforme (31, 36) par des miroirs réflecteurs (29, 30, 34) de manière à être réfléchis dans des trajets optiques parallèles de sorte que chaque faisceau fait rayonner une moitié respective dudit relais variateur de lumière (8) à cristaux liquides de manière sensiblement parallèle, le nombre de fois où l'un des deux faisceaux lumineux est réfléchi dans son trajet optique entre le dispositif de décomposition de faisceau polarisant (2, 20) et le moyen de séparation de lumière (4) est égal au nombre de fois où l'autre des deux faisceaux lumineux est réfléchi le long du trajet optique entre le dispositif de décomposition de faisceau (2, 20) et le moyen de séparation de lumière (4).

3. Appareil d'affichage à cristaux liquides de type projecteur selon la revendication 1 ou 2, dans lequel le dispositif de décomposition de faisceau polarisant (2, 20) comporte un prisme polariseur cubique (2) composé d'une paire de prismes rectangulaires qui sont fixés ensemble par un adhésif au niveau de leurs surfaces inclinées.

4. Appareil d'affichage à cristaux liquides de type projecteur selon la revendication 1 ou 2, dans lequel ledit dispositif de décomposition de faisceau (2, 20) comporte une pluralité de feuilles de verre (20) laminées de manière parallèle et conçues de sorte que l'angle d'incidence de la lumière par rapport auxdites feuilles ou à la ladite feuille de verre est égal à l'angle d'incidence brewstérienne.

5. Appareil d'affichage à cristaux liquides de type projecteur selon la revendication 1 ou 2, dans lequel ledit dispositif de décomposition de faisceau (2) comporte un prisme polariseur constitué d'un miroir réflecteur plan dont une surface est revêtue d'une couche d'enduction diélectrique laminée.

6. Appareil d'affichage à cristaux liquides de type projecteur selon la revendication 1 ou 2, dans lequel ledit dispositif de décomposition de faisceau (2, 20) comprend au moins une plaque de verre (20).

7. Appareil d'affichage à cristaux liquides de type projecteur selon la revendication 2 ou l'une quelconque des revendications 3 à 6 lorsqu'elles sont dépendantes de la revendication 2, caractérisé en ce que les longueurs de trajet optique traversées par chacun des deux faisceaux lumineux polarisés linéairement (P, S) entre les moyens de séparation de polarisation et le relais variateur de lumière à cristaux liquides sont sensiblement égales.

8. Appareil d'affichage à cristaux liquides de type projecteur selon la revendication 2 ou l'une quelconque des revendications 3 à 6 lorsqu'elles sont dépendantes de la revendication 2, caractérisé en ce que les longueurs de trajet optique traversées par chacun des deux faisceaux lumineux polarisés linéairement (P, S) entre ladite source lumineuse et le relais variateur de lumière à cristaux liquides sont sensiblement égales.

9. Appareil d'affichage à cristaux liquides de type projecteur selon la revendication 1 ou l'une quelconque des revendications 3 à 6 lorsqu'elles sont dépendantes de la revendication 1, caractérisé en ce que la conversion de polarisation des deux faisceaux lumineux polarisés linéairement s'effectue par les miroirs réflecteurs seulement, la conception étant telle qu'aucune plaque de longueur d'onde n'est nécessaire pour la conversion de polarisation.

FIG._1

FIG._2

FIG._3

FIG._4

FIG._5

FIG._6

FIG._7

FIG._8

FIG._9

FIG._10

FIG._11

## FIG._12

## FIG._13
(PRIOR ART)